# EUROPEAN PATENT SPECIFICATION

(11) **EP 3 454 162 B1**
(45) Date of publication and mention of the grant of the patent: **08.07.2020**
(21) Application number: 18192577.7
(22) Date of filing: 04.09.2018
(51) Int. Cl.: G05D 16/20, F04D 27/00, G05B 11/32

(54) **CONTROL SYSTEM FOR A COMPRESSOR WITH SPEED-BASED SUBSYSTEM, SYNTHESIS PLANT AND CONTROL METHOD**
STEUERUNGSSYSTEM FÜR EINEN VERDICHTER MIT DREHZAHLBASIERTEM SUBSYSTEM, SYNTHESEANLAGE UND STEUERUNGSVERFAHREN
SYSTÈME DE COMMANDE POUR UN COMPRESSEUR COMPORTANT UN SOUS-SYSTÈME À BASE DE VITESSE, INSTALLATION DE SYNTHÈSE ET PROCÉDÉ DE COMMANDE

(30) Priority: 08.09.2017 IT 201700100734
(43) Date of publication of application: 13.03.2019
(73) Proprietor: Nuovo Pignone Tecnologie - S.r.l., 50127 Florence (IT)
(72) Inventor: CALOSI, Mirco, 50127 Florence (IT); SIGNORINI, Annamaria, 50127 Florence (IT); PASQUOTTI, Maura, 50127 Florence (IT); MOSCATELLI, Pasquale Gianluca, 50127 Florence (IT); RIZZELLI, Marco, 50127 Florence (IT); PELELLA, Marco, 50127 Florence (IT)
(74) Representative: BRP Renaud & Partner mbB Rechtsanwälte Patentanwälte Steuerberater

(56) References cited:
- US-A- 3 979 655
- US-A- 4 218 191

## Description

### TECHNICAL FIELD

Embodiments of the subject matter disclosed herein correspond to control systems for a rotary compressor driven by a rotary engine, synthesis plants and control methods.

### BACKGROUND ART

Trains comprising a compressor driven by an engine are quite common, in particular in the field of "Oil & Gas".

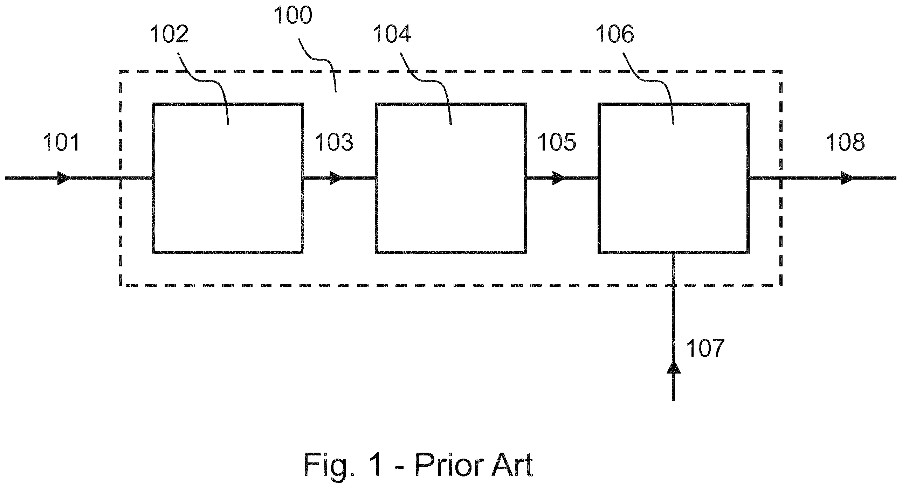

A typical control system for such trains, such as system 100 shown in annexed Fig. 1, determines (block 102) a load demand 103 based on a (detected) suction pressure 101 of the compressor, then determines (block 104) a speed setpoint 105 based on the previously-determined load demand 103, and finally determines (block 106) a control signal 108 based on the previously-determined speed setpoint 105 and a (detected) rotation speed 107 of the compressor; the so-determined control signal 108 is fed to a control input of the engine. A control system of this type is disclosed, for example, in US patent n° 3,979,655.

Such typical control system works well if the effects of disturbances coming from units upstream or downstream the compressor or the effects of interactions between the compressor and said units, on compressor speed and/or on controlled performance variables are consistent; this applies, for example, if the composition of the gas mixture at the inlet of the compressor remains absolutely constant or, at least, quite constant.

The above-mentioned trains are used, for example, in synthesis plant for the production of ammonia. An example of a known process for producing ammonia is the one that may be licensed from KBR that will be called in the following "KBR process".

In a synthesis plant, for example, there are units upstream the compressor arranged to prepare a gas mixture (often containing hydrogen and/or nitrogen and/or carbon monoxide) to be processed by the compressor. Although the plant is designed so to maintain the composition of the gas mixture constant, one or more of these units may adversely affect the composition in certain operating conditions. For example, in an ammonia plant implementing the "KBR process", there is a so-called "purifier" (including a condensation reformer) upstream the compressor system (including two compressors) that may cause variations in the composition of the gas mixture.

In such synthesis plants, due to a (substantial) variation in the composition of the gas mixture and a consequential (substantial) variation in the rotation speed of the compressor, a typical control system implements a control action in the opposite direction to reject the disturbance. For this reason, the control system has to be switched from "automatic mode" or "automatic control" to "manual mode" or "manual control" in order to avoid amplifying the upset and reaching an unstable condition; after some time, the control system is switched back to "automatic mode" or "automatic control". This means that the control system is semiautomatic.

It would be desirable to have a full-automatic control system that adjusts a rotational speed of a compressor to compensate for variations in the composition of a gas mixture at an inlet of the compressor.

### SUMMARY

First embodiments of the subject matter disclosed herein relate to a control system for a rotary compressor driven by a rotary engine.

According to such first embodiments, a control system for a rotary compressor driven by a rotary engine, comprises: a first control subsystem, a second control subsystem and a selector; the first control subsystem comprises: a performance input arranged to receive a first measure signal indicating performance of said rotary compressor, and a first control output arranged to provide a first control signal as a function of said first measure signal; the second control subsystem comprises: a speed input arranged to receive a second measure signal indicating rotation speed of said rotary compressor or said rotary engine, and a second control output arranged to provide a second control signal as a function of said second measure signal; the selector comprises: a first input electrically connected to said first control output, a second input electrically connected to said second control output, and a third control output arranged to provide a third control signal to a power control input of said rotary engine; said selector is arranged to select said first control signal or said second control signal as said third control signal to be provided at said third control output.

Second embodiments of the subject matter disclosed herein relate to a synthesis plant.

According to such second embodiments, the synthesis plant comprises: a rotary compressor comprising an inlet and an outlet, wherein said inlet is arranged to receive a gas mixture, a rotary engine driving said rotary compressor, and a control system as set out above.

Third embodiments of the subject matter disclosed herein relate to a method of controlling a rotary compressor driven by a rotary engine.

According to such third embodiments, the method comprises the steps of: measuring a parameter of said rotary compressor, said parameter indicating performance of said rotary compressor, generating a first control signal as a function of said parameter, measuring a rotation speed of said rotary compressor or said rotary engine, generating a second control signal as a function of said rotation speed, generating a third control signal by selecting between said first control signal and said second control signal, and providing said third control signal to control input terminals of said rotary engine.

### BRIEF DESCRIPTION OF DRAWINGS

The accompanying drawings, which are incorporated herein and constitute an integral part of the present specification, illustrate exemplary embodiments of the present invention and, together with the detailed description, explain these embodiments. In the drawings:
Fig. 1 shows a block diagram of a control system according to the prior art,
Fig. 2 shows a general block diagram applicable to several embodiments of a control system,
Fig. 3 shows a general block diagram applicable to several embodiments of a synthesis plant,
Fig. 4 shows a block diagram of a selector suitable for embodiments of control systems,
Fig. 5 shows a detailed block diagram of an embodiment of a control system, and
Fig. 6 shows a flow chart of an embodiment of a control method.

### DETAILED DESCRIPTION

The following description of exemplary embodiments refers to the accompanying drawings.

The following description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

In the following, embodiments of the subject matter disclosed herein will be described through block diagrams made of blocks connected by lines entering into and exiting out of blocks as it is customary practice in the field of "control theory".

It is to be noted that such block diagrams may be implemented in many different ways through various possible combinations of pieces of hardware and pieces of software.

Therefore, throughout the specification (i.e. description, claims and abstract) and drawings, a "block" may refer to a piece of hardware or piece of software (running on a piece of hardware), an "input" or an "output" may refer to electrical terminals or a piece of data stored in a computer memory (that may be for example internal to a PLC), the expression "receiving a signal" may mean "letting an electrical signal flow into electrical terminals" or "reading a piece of data from a memory", the expression "providing an output" may mean "letting an electrical signal flow out of electrical terminals" or "writing a piece of data to a memory", the expression "electrically connected" (when referred for example to blocks) may correspond to having electrical wires between electrical terminals of a block and electrical terminals of another block or to having a block writing a piece of data to a memory and another block reading the same piece of data from the same memory.

According to a typical implementation, a new and inventive fully-automatic control system may be implemented for example through a single PLC (= Programmable Logic Controller) and one or more pieces of software; in this case, in particular, a block may correspond to a piece of software, i.e. a software program or a software subroutine.

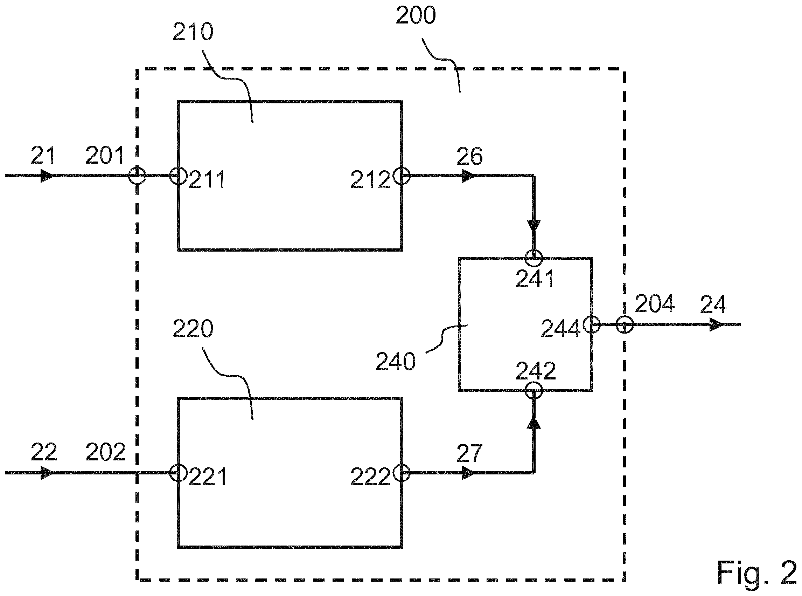

Figures 2, 3, 4, and 5 illustrate embodiments of a new and inventive fully-automatic control system that adjusts rotational speed of a compressor in response to disturbances, such as, but not limited to, variations in the composition of a gas mixture at an inlet of the compressor. The gas mixture may comprise so-called "synthesis gas" that often contains hydrogen and/or nitrogen and/or carbon monoxide. The control system together with a controlled train, including a rotary compressor and an engine, may be used within a plant to synthesize ammonia from the gas mixture. The rotary compressor may be driven by the engine.

The new full-automatic control system differs from prior control systems in that it includes not one, but at least two control subsystems. The first control subsystem performs control based preferably only on a performance parameter of the compressor, in particular its suction pressure. The second control subsystem performs control based preferably only on the rotation speed of the engine or the compressor. The first control subsystem is used when the rotation speed has a value corresponding to the design (or not too far therefrom); this means for example that the composition of the gas mixture at the inlet of the compressor is as expected (or not too far therefrom). The second control subsystem is used the rotation speed is too high or too low; this means for example that the composition of the gas mixture at the inlet of the compressor is far therefrom expected. Therefore, no human intervention is necessary.

Referring to Fig. 2, a new control system 200 is arranged to control a rotary compressor driven by a rotary engine.

Control system 200 may include: a first control subsystem 210, a second control subsystem 220 and a selector 240.

It is to be noted that a control subsystem may be implemented in many different ways through various possible combinations of pieces of hardware and pieces of software. If the control system is implemented for example through a single PLC, each or any of the control subsystems may be implemented through a so-called "software module", i.e. a set of software programs or software subroutines cooperating for a specific purpose, running on the PLC.

Control system 200 has a first input 201, a second input 202 and an output 204.

First control subsystem 210 comprises: a performance input 211 arranged to receive a first measure signal 21 indicating performance of the rotary compressor, and a first control output 212 arranged to provide a first control signal 26 as a function of signal 21. Typically, first measure signal 21 indicates suction pressure of the rotary compressor; alternatively, it indicates another performance variable of the compressor such as, for example, discharge pressure of the compressor or net gas (mass or volumetric) flow rate processed by the compressor. Typically, control signal 26 is a power control signal, in particular a speed control signal (in case there is a direct relation between speed and power generated by the engine). Typically, the first control signal 26 is a function of only signal 21 (but also of other parameters and constants).

Second control subsystem 220 comprises: a speed input 221 arranged to receive a second measure signal 22 indicating rotation speed of the rotary compressor or the rotary engine (usually the two rotation speeds are equal or at a fixed ratio), and a second control output 222 arranged to provide a second control signal 27 as a function of signal 22. Typically, control signal 27 is a power control signal, in particular a speed control signal (in case there is a direct relation between speed and power generated by the engine). Typically, the second control signal 27 is a function of only signal 22 (but also of other parameters and constants).

In the following, the suction pressure of the compressor will be considered the performance variable of the compressor without limiting the generality of the foregoing.

Selector 240 comprises: a first input 241 electrically connected to the first control output 212, a second input 242 electrically connected to the second control output 222, and a third control output 244 arranged to provide a third control signal 24 to a control input of the rotary engine.

Typically, control signal 24 is a power control signal, in particular a speed control signal (in case there is a direct relation between speed and power generated by the engine). For example, if the engine is a steam turbine, control signal 24 may be a signal indicating the opening degree of its steam valve; more in particular, it is the opening percentage of this valve.

Selector 240 is arranged to select control signal 26 or control signal 27 as control signal 24 to be provided at control output 244.

Input 211 is electrically connected to input 201 of control system 200; input 221 is electrically connected to input 202 of control system 200; output 244 is electrically connected to output 204 of control system 200.

Selector 240 may carry out selection of input signals according to one or more predetermined selection criteria. For example, selector 240 may select signal 27 instead of signal 26 if the compressor tends to rotate too quickly or too slowly.

Selector 240 is advantageously arranged to select signal 27 instead of signal 26 at one or more of the following two conditions:
A) control signal 27 is higher than control signal 26,
B) control signal 27 is lower than control signal 26.

It is to be noted that the above two conditions depend on the current values of control signals 26 and 27, as repeatedly (in particularly periodically) determined respectively by control subsystems 210 and 220; condition A applies when the compressor tends to rotate too slowly and condition B applies when the compressor tends to rotate too quickly; anyway, none of the above two conditions is equivalent to a test on the current rotating speed of the compressor.

Second control subsystem 220 may correspond simply to a PID controller wherein, preferably, only the P term and the I term are used; in this case, the controller may be defined a PI controller.

Control subsystem 220 may be split into two portions, each of these portions providing a control signal; at a certain time, only one of these two control signals is valid; for example, one is valid if the compressor tends to rotate too quickly and one is valid if the compressor tends to rotate too slowly.

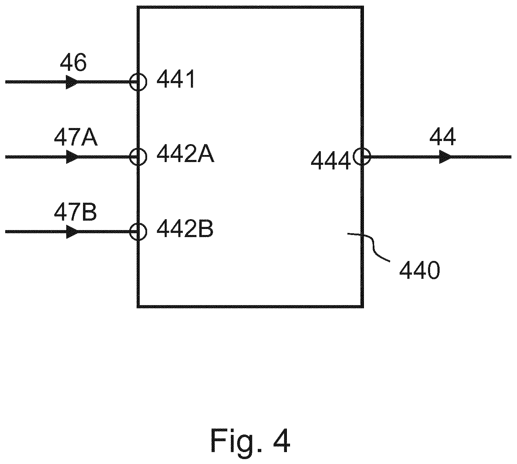

In this case, the selector may be, for example, as selector 440 shown in Fig. 4. Selector 440 has a first input 441 for receiving a control signal 46 from the first control subsystem (for example subsystem 210), a second input 442A for receiving a control signal 47A from a first portion of the second control subsystem (for example subsystem 220), a third input 442B for receiving a control signal 47B from a second portion of the second control subsystem (for example subsystem 220), and an output 444 for providing a control signal 44 selected between signals 46, 47A and 47B.

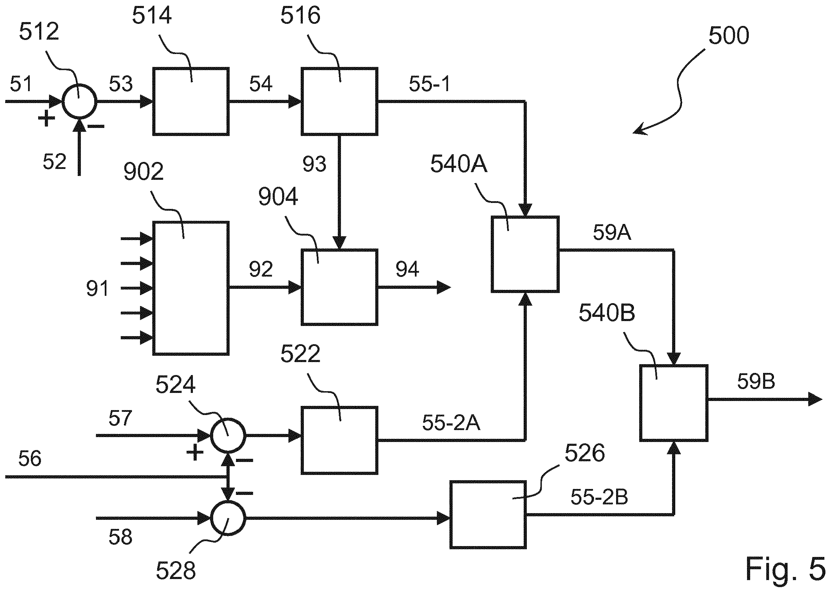

The embodiment of Fig. 5, i.e. control system 500, will now be considered.

Control system 500 comprises a first control subsystem, a second control subsystem and a selector. The first control subsystem corresponds to blocks 512, 514 and 516. The second control subsystem corresponds to blocks 522, 524, 526 and 528. The selector corresponds to selectors 540A and 540B.

The first control subsystem of the embodiment of Fig. 5 is arranged to calculate a suction pressure error signal 53 as a difference between a suction pressure setpoint 51 and a suction pressure measure signal 52.

The first control subsystem of the embodiment of Fig. 5 comprises a load controller 514 arranged to determine a load demand 54 based on suction pressure error signal 53; controller 514 is advantageously a PID controller.

The first control subsystem of the embodiment of Fig. 5 comprises a converter 516 arranged to determine a first power control signal 55-1 based on load demand 54.

Converter 516 is, in particular, a split converter and is arranged to provide alternatively a first power control signal 55-1 and an anti-surge control signal 93.

The second control subsystem of the embodiment of Fig. 5 comprises a first speed controller 522 of the PID type (preferably, only the P term and the I term are used; in this case, controller 522 may be defined a PI controller); first speed controller 522 is arranged to determine a second power control signal 55-2A based on a difference between a lower speed limit 57 and a second rotation speed measure signal 56 (obtained through e.g. a subtractor 524), and provide it at an output.

The second control subsystem of the embodiment of Fig. 5 comprises a second speed controller 526 of the PID type (preferably, only the P term and the I term are used; in this case, controller 526 may be defined a PI controller); second speed controller 526 is arranged to determine a third power control signal 55-2B based on a difference between an upper speed limit 58 a second rotation speed measure signal 56 (obtained through e.g. a subtractor 528), and provide it at an output.

The second control subsystem of the embodiment of Fig. 5 comprises a first selector 540A for managing control signal 55-2A and a second selector 540B for managing control signal 55-2B.

In particular, selector 540A is arranged to select control signal 55-2A and provide it at output 59A when rotation speed measure signal 56 has a low value, i.e. when rotation speed of the compressor is very low; alternatively, signal 55-1 is provided at output 59A.

In particular, selector 540B is arranged to select control signal 55-2B and provide it at output 59B when rotation speed measure signal 56 has a high value, i.e. when rotation speed of the compressor is very high; alternatively, signal 59A is provided at output 59B.

It is to be noted that preferably selectors 540A and 540B make selections based on comparisons between signals at their inputs; in other words, preferably neither selector 540A nor selector 540B make selections based on a direct test on the current rotation speed of the compressor.

The embodiment 500 of Fig. 5 comprises an anti-surge control subsystem.

The anti-surge control subsystem comprises a controller 902 and selector 904.

Controller 902 determines an anti-surge control signal 92 based on a set 91 of parameters; this set comprises in particular the pressure and the temperature at the inlet of the compressor, the pressure and the temperature at the outlet of the compressor, and the volumetric flow rate processed by the compressor. Such controller may determine an anti-surge control signal in a known way.

Selector 904 is arranged to receive the anti-surge control signal 92 and another anti-surge control signal 93, and to select one of them as anti-surge control signal 94 to be provide to an anti-surge valve of the compressor; control signal 94 may be a signal indicating the opening degree of the anti-surge valve, more in particular its opening percentage. Selector 904 may select, for example, the anti-surge control signal having higher value.

Anti-surge control signal 93 is provided by split converter 516.

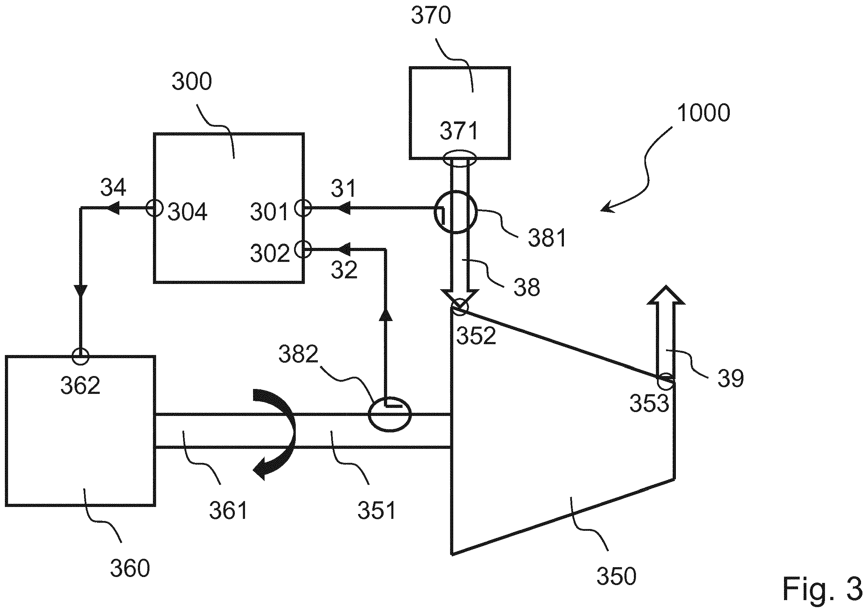

Fig. 3 shows a general block diagram applicable to several embodiments of an improved synthesis plant, in particular to an ammonia improved synthesis plant.

Plant 1000 comprises: a rotary compressor 350, a rotary engine 360 driving the rotary compressor 350, and a control system 300.

Control system 300 is of the type comprising a first control subsystem and second control subsystem as, for example, the one shown in Fig. 2.

In the embodiment of Fig. 3, the shaft 361 of rotary engine 360 is mechanically directly connected to the shaft 351 of rotary compressor 350.

Compressor 350 has an inlet 352 for receiving an uncompressed gas mixture flow 38 and an outlet 353 for providing a compressed gas mixture flow 39.

Control system 300 has a first input 301 for receiving a suction pressure measure signal 31, a second input 302 for receiving a rotation speed measure signal 32, and an output 304 for providing a power control signal 34.

Output 304 is electrically connected to an input 362 being a power control input of engine 360; typically, by varying power, also rotation speed varies; therefore, engine 360 is a variable-speed rotary engine.

There is a pressure sensor 381 that is positioned and configured to monitor uncompressed gas mixture flow 38 and electrically connected to input 301.

There is a rotation speed sensor 382 that is positioned and configured to monitor shaft 351 and electrically connected to input 302.

Engine 360 is advantageously a steam turbine; alternatively, it may be, for example, a gas turbine or a (variable-speed) motor such as an electric motor. The use of a steam turbine is advantageous as in a synthesis plant heat is generated and a steam turbine allows to recycle some of this generated heat for a useful purpose, i.e. rotating the compressor.

Synthesis plant 1000 may comprise one or more further compressors. For example, two compressors may be fluidly connected in series and may be controlled by the same control system 300 through the same control signal or through the same measure signals.

Upstream compressor 350 there is a unit 370, for example a reformer (in particular a condensation reformer). In the embodiment of Fig. 3, an outlet 371 of unit 370 is fluidly connected to inlet 352 of compressor 350.

It is to be noted that, due to the presence of unit 370, gas mixture 38 may sometimes vary its composition. This is particular the case if unit 370 is a condensation reformer.

Synthesis plant 1000 is advantageously a plant for producing ammonia. If the synthesis plant 1000 were licensed to perform the KBR ammonia process, then a purifier arrangement including a condensation reformer is typically placed upstream the synthesis gas compressor arrangement. Although the purifier arrangement would be configured to maintain the composition of the output gas mixture constant, it could do so only to a certain extent and not at all times for any operating condition of the plant, unless the synthesis plant 1000 was built or upgraded to include an embodiment of the new two-subsystem control system described, shown and claimed herein.

It is to be noted that compression of so-called "syngas" may be used in several synthesis processes, for example in order to synthetize ammonia, methanol, etc.

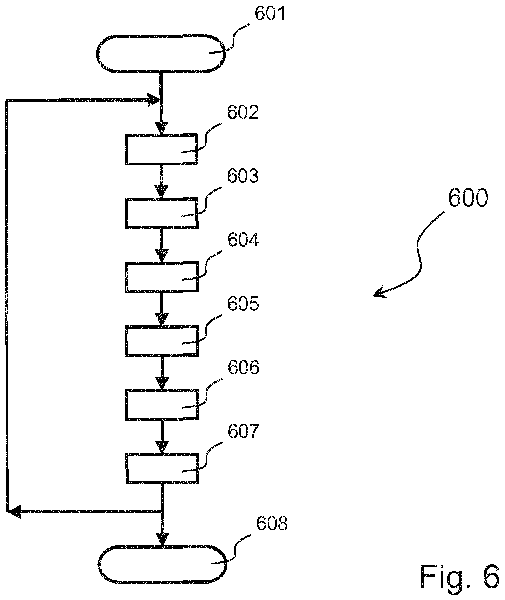

Fig. 6 shows a flow chart 600 of an embodiment of a method of controlling a rotary compressor, such as for example compressor 350 in Fig. 3, driven by a rotary engine, such as for example steam turbine 360 in Fig. 3.

Block 601 corresponds to the start of a control process.

Block 608 corresponds to the end of the control process.

The activities corresponding to blocks from 602 to 607 are cyclically repeated.

Block 602 corresponds to measuring a parameter of the rotary compressor indicating performance of the rotary compressor; in embodiment of Fig. 3 for example, sensor 381 measures a suction pressure of compressor 350.

Block 603 corresponds to generating a first control signal as a function of this parameter; in embodiment of Fig.3 for example, this activity is carried out by control system 300 internally thereto (see for example Fig. 2).

Block 604 corresponds to measuring a rotation speed of the rotary compressor or the rotary engine; in embodiment of Fig. 3 for example, sensor 382 measures a rotation speed of a single shaft that is both a shaft 361 of steam turbine 360 and a shaft 351 of compressor 350.

Block 605 corresponds to generating a second control signal as a function of the rotation speed; in embodiment of Fig.3 for example, this activity is carried out by control system 300 internally thereto (see for example Fig. 2).

Block 606 corresponds to generating a third control signal by selecting between the first control signal and the second control signal; in embodiment of Fig.3 for example, this activity is carried out by control system 300 internally thereto (see for example Fig. 2).

Block 607 corresponds to providing the third control signal to control input terminals of the rotary engine; in embodiment of Fig.3 for example, this activity corresponds to electrically connecting output terminals 304 of control system 300 to control terminals 362 of steam turbine 360.

As explained previously, the second control signal may be selected instead of the first control signal at one or more of at least the following conditions:
- the second control signal is higher than the first control signal,
- the second control signal is lower than the first control signal.

Other advantageous functionalities of the novel and inventive control method correspond to advantageous components of the novel and inventive control system.

## Claims

1. A control system (200) for a rotary compressor driven by a rotary engine, said control system (200) comprising:
A) a first control subsystem (210) comprising:
- a performance input (211) arranged to receive a first measure signal (21) indicating performance of said rotary compressor, and
- a first control output (212) arranged to provide a first control signal (26) as a function of said first measure signal (21);
B) a second control subsystem (220) comprising:
- a speed input (221) arranged to receive a second measure signal (22) indicating rotation speed of said rotary compressor or said rotary engine, and
- a second control output (222) arranged to provide a second control signal (27) as a function of said second measure signal (22);
**characterised in that** said control system (200) further comprises:
C) a selector (240) comprising:
- a first input (241) electrically connected to said first control output (212),
- a second input (242) electrically connected to said second control output (222), and
- a third control output (244) arranged to provide a third control signal (24) to a power control input of said rotary engine,
wherein said selector (240) is arranged to select said first control signal (26) or said second control signal (27) as said third control signal (24) to be provided at said third control output (244).

2. The control system (200) of claim 1, wherein said selector (240) is arranged to select said second control signal (27) instead of said first control signal (26) at one or more of at least the following conditions:
- said second control signal (27) is higher than said first control signal (26),
- aid second control signal (27) is lower than said first control signal (26).

3. The control system (500) of claim 1 or claim 2, wherein said second control subsystem comprises a first speed controller (522) of the PID type, only the P term and the I term being preferably used, wherein said first speed controller (522) is arranged to determine a control signal (55-2A) based on said second measure signal (56) and a lower speed limit (57), and provide it at an output.

4. The control system (500) of any preceding claim, comprising a first selector (540A) arranged to select the control signal (55-2A) at the output of said first speed controller (522) when said second measure signal (56) has a low value.

5. The control system (500) of any preceding claim, wherein said second control subsystem comprises a second speed controller (526) of the PID type, only the P term and the I term being preferably used, wherein said second speed controller (526) is arranged to determine a control signal (55-2B) based on said second measure signal (56) and an upper speed limit (58), and provide it at an output.

6. The control system (500) of any preceding claim, comprising a second selector (540B) arranged to select the control signal (55-2B) at the output of said second speed controller (526) when said second measure signal (56) has a high value.

7. The control system (500) of any preceding claim, wherein said first control subsystem is arranged to calculate a performance error signal (53) as a difference between a performance setpoint (51) and said first measure signal (52).

8. The control system (500) of any preceding claim, wherein said first control subsystem comprises a load controller (514) arranged to determine a load demand (54) based on said performance error signal (53).

9. The control system (500) of any preceding claim, wherein said first control subsystem comprises a converter (516) arranged to determine a control signal (55-1) based on said load demand (54).

10. The control system (500) of any preceding claim, wherein said converter (516) is a split converter and is arranged to provide alternatively a control signal (55-1) and an anti-surge control signal (93).

11. The control system (500) of any of the preceding claims, wherein said performance input (211) of said first and/or second subsystem (210) is arranged to receive a measure signal (21) indicating suction pressure of said rotary compressor.

12. A synthesis plant (1000) comprising:
- a rotary compressor (350) comprising an inlet (352) and an outlet (353), wherein said inlet (352) is arranged to receive a gas mixture (38);
- a rotary engine (360) driving said rotary compressor (350); and
- a control system (300) according to any of the preceding claims.

13. The plant (1000) of claim 12, wherein said rotary engine (360) is a steam turbine.

14. The plant (1000) of claim 12 or 13, comprising a reformer (370) upstream said rotary compressor (350), wherein said reformer (370) comprises an outlet (371) fluidly connected to said inlet (352) of said rotary compressor (350).

15. A method (600) of controlling a rotary compressor driven by a rotary engine, comprising the steps of:
A) measuring (602) a parameter of said rotary compressor, said parameter indicating performance of said rotary compressor,
B) generating (603) a first control signal as a function of said parameter,
C) measuring (604) a rotation speed of said rotary compressor or said rotary engine,
D) generating (605) a second control signal as a function of said rotation speed,
**characterised in that** said method (600) further comprises the steps of:
E) generating (606) a third control signal by selecting between said first control signal and said second control signal, and
F) providing (607) said third control signal to control input terminals of said rotary engine.

## Patentansprüche

1. Steuerungssystem (200) für einen Rotationsverdichter, der durch eine Rotationsmaschine angetrieben wird, wobei das Steuerungssystem (200) umfasst:
A) ein erstes Steuerungssubsystem (210), umfassend:
- einen Leistungseingang (211), der zum Empfangen eines ersten Messsignals (21), das die Leistung des Rotationsverdichters angibt, angeordnet ist, und
- einen ersten Steuerungsausgang (212), der dazu angeordnet ist, ein erstes Steuersignal (26) in Abhängigkeit vom ersten Messsignal (21) bereitzustellen;
B) ein zweites Steuerungssubsystem (220), umfassend:
- einen Drehzahleingang (221), der zum Empfangen eines zweiten Messsignals (22), das die Drehzahl des Rotationsverdichters oder der Rotationsmaschine angibt, angeordnet ist, und
- einen zweiten Steuerungsausgang (222), der dazu angeordnet ist, ein zweites Steuersignal (27) in Abhängigkeit vom zweiten Messsignal (22) bereitzustellen;
**dadurch gekennzeichnet, dass** das Steuerungssystem (200) ferner umfasst:
C) einen Selektor (240), umfassend:
- einen ersten Eingang (241), der mit dem ersten Steuerungsausgang (212) elektrisch verbunden ist,
- einen zweiten Eingang (242), der mit dem zweiten Steuerungsausgang (222) elektrisch verbunden ist, und
- einen dritten Steuerungsausgang (244), der dazu angeordnet ist, ein drittes Steuersignal (24) an einen Leistungssteuerungseingang der Rotationsmaschine bereitzustellen;,
wobei der Selektor (240) dazu angeordnet ist, das erste Steuersignal (26) oder das zweite Steuersignal (27) als das dritte Steuersignal (24) auszuwählen, das an dem dritten Steuerungsausgang (244) bereitzustellen ist.

2. Steuerungssystem (200) nach Anspruch 1, wobei der Selektor (240) dazu angeordnet ist, das zweite Steuersignal (27) anstelle des ersten Steuersignals (26) bei einer oder mehreren von mindestens den folgenden Bedingungen auszuwählen:
- das zweite Steuersignal (27) ist höher als das erste Steuersignal (26),
- das zweite Steuersignal (27) ist niedriger als das erste Steuersignal (26).

3. Steuerungssystem (500) nach Anspruch 1 oder Anspruch 2, wobei das zweite Steuerungssubsystem einen ersten Drehzahlregler (522) vom PID-Typ umfasst, wobei vorzugsweise nur der P-Term und der I-Term verwendet werden, wobei der erste Drehzahlregler (522) angeordnet ist zum Bestimmen eines Steuersignals (55-2A) basierend auf dem zweiten Messsignal (56) und einer unteren Drehzahlbegrenzung (57), und Bereitstellen an einem Ausgang.

4. Steuerungssystem (500) nach einem der vorstehenden Ansprüche, umfassend einen ersten Selektor (540A), der angeordnet ist zum Auswählen des Steuersignals (55-2A) an dem Ausgang des ersten Drehzahlreglers (522), wenn das zweite Messsignal (56) einen niedrigen Wert aufweist.

5. Steuerungssystem (500) nach einem der vorstehenden Ansprüche, wobei das zweite Steuerungssubsystem einen zweiten Drehzahlregler (526) vom PID-Typ umfasst, wobei vorzugsweise nur der P-Term und der I-Term verwendet werden, wobei der zweite Drehzahlregler (526) angeordnet ist zum Bestimmen eines Steuersignals (55-2B) basierend auf dem zweiten Messsignal (56) und einer oberen Drehzahlbegrenzung (58), und Bereitstellen an einem Ausgang.

6. Steuerungssystem (500) nach einem der vorstehenden Ansprüche, umfassend einen zweiten Selektor (540B), der angeordnet ist zum Auswählen des Steuersignals (55-2B) an dem Ausgang des zweiten Drehzahlreglers (526), wenn das zweite Messsignal (56) einen hohen Wert aufweist.

7. Steuerungssystem (500) nach einem der vorstehenden Ansprüche, wobei das erste Steuerungssubsystem angeordnet ist zum Berechnen eines Leistungsfehlersignals (53) als eine Differenz zwischen einem Leistungssollwert (51) und dem ersten Messsignal (52).

8. Steuerungssystem (500) nach einem der vorstehenden Ansprüche, wobei das erste Steuerungssubsystem eine Laststeuerung (514) umfasst, die dazu angeordnet ist, eine Lastanforderung (54) basierend auf dem Leistungsfehlersignal (53) zu bestimmen.

9. Steuerungssystem (500) nach einem der vorstehenden Ansprüche, wobei das erste Steuerungssubsystem einen Wandler (516) umfasst, der angeordnet ist, um ein Steuersignal (55- 1) basierend auf der Lastanforderung (54) zu bestimmen.

10. Steuerungssystem (500) nach einem der vorstehenden Ansprüche, wobei der Wandler (516) ein Split-Konverter (geteilter Wandler) ist und dazu angeordnet ist, alternativ ein Steuersignal (55-1) und ein Überspannungsschutz-Steuersignal (93) bereitzustellen.

11. Steuerungssystem (500) nach einem der vorstehenden Ansprüche, wobei der Leistungseingang (211) des ersten und/oder des zweiten Subsystems (210) dazu angeordnet ist, ein Messsignal (21) zu empfangen, das den Ansaugdruck des Rotationsverdichters angibt.

12. Syntheseanlage (1000), umfassend:
- einen Rotationsverdichter (350), umfassend einen Einlass (352) und einen Auslass (353), wobei der Einlass (352) dazu angeordnet ist, ein Gasgemisch (38) aufzunehmen;
- eine Rotationsmaschine (360), die den Rotationsverdichter (350) antreibt; und
- ein Steuerungssystem (300) nach einem der vorstehenden Ansprüche.

13. Anlage (1000) nach Anspruch 12, wobei die Rotationsmaschine (360) eine Dampfturbine ist.

14. Anlage (1000) nach Anspruch 12 oder 13, umfassend einen dem Rotationsverdichter (350) vorgelagerten Reformer (370), wobei der Reformer (370) einen Auslass (371) umfasst, der fluidisch mit dem Einlass (352) des Rotationsverdichters (350) verbunden ist.

15. Verfahren (600) zum Steuern eines Rotationsverdichters, der durch eine Rotationsmaschine angetrieben wird, umfassend die folgenden Schritte:
A) Messen (602) eines Parameters des Rotationsverdichters, wobei der Parameter die Leistung des Rotationsverdichters angibt,
B) Generieren (603) eines ersten Steuersignals in Abhängigkeit von dem Parameter,
C) Messen (604) einer Drehzahl des Rotationsverdichters oder der Rotationsmaschine,
D) Generieren (605) eines zweiten Steuersignals in Abhängigkeit von der Drehzahl,
**dadurch gekennzeichnet, dass** das Verfahren (600) ferner folgende Schritte umfasst:
E) Generieren (606) eines dritten Steuersignals durch Auswählen zwischen dem ersten Steuersignal und dem zweiten Steuersignal, und
F) Bereitstellen (607) des dritten Steuersignals an Steuereingangsanschlüsse der Rotationsmaschine.

## Revendications

1. Système de commande (200) pour compresseur rotatif entraîné par un moteur rotatif, ledit système de commande (200) comprenant :
A) un premier sous-système de commande (210) comprenant :
- une entrée de performance (211) conçue pour recevoir un premier signal de mesure (21) indiquant une performance dudit compresseur rotatif, et
- une première sortie de commande (212) conçue pour fournir un premier signal de commande (26) en fonction dudit premier signal de mesure (21) ;
B) un deuxième sous-système de commande (220) comprenant :
- une entrée de vitesse (221) conçue pour recevoir un deuxième signal de mesure (22) indiquant une vitesse de rotation dudit compresseur rotatif ou dudit moteur rotatif, et
- une deuxième sortie de commande (222) conçue pour fournir un deuxième signal de commande (27) en fonction dudit deuxième signal de mesure (22) ;
**caractérisé en ce que** ledit système de commande (200) comprend en outre :
C) un sélecteur (240) comprenant :
- une première entrée (241) électriquement reliée à ladite première sortie de commande (212),
- une deuxième entrée (242) électriquement reliée à ladite deuxième sortie de commande (222), et
- une troisième sortie de commande (244) conçue pour fournir un troisième signal de commande (24) à une entrée de commande de puissance dudit moteur rotatif,
dans lequel ledit sélecteur (240) est conçu pour sélectionner ledit premier signal de commande (26) ou ledit deuxième signal de commande (27) lorsque ledit troisième signal de commande (24) doit être fourni au niveau de ladite troisième sortie de commande (244).

2. Système de commande (200) selon la revendication 1, dans lequel ledit sélecteur (240) est conçu pour sélectionner ledit deuxième signal de commande (27) au lieu dudit premier signal de commande (26) dans une ou plusieurs d'au moins les conditions suivantes :
- ledit deuxième signal de commande (27) est supérieur audit premier signal de commande (26),
- ledit deuxième signal de commande (27) est inférieur audit premier signal de commande (26).

3. Système de commande (500) selon la revendication 1 ou la revendication 2, dans lequel ledit deuxième sous-système de commande comprend un premier régulateur de vitesse (522) de type PID, seuls le terme P et le terme I étant de préférence utilisés, dans lequel ledit premier régulateur de vitesse (522) est conçu pour déterminer un signal de commande (55-2A) sur la base dudit deuxième signal de mesure (56) et d'une limite de vitesse inférieure (57), et le fournir en sortie.

4. Système de commande (500) selon une quelconque revendication précédente, comprenant un premier sélecteur (540A) conçu pour sélectionner le signal de commande (55-2A) au niveau de la sortie dudit premier régulateur de vitesse (522) lorsque ledit deuxième signal de mesure (56) a une valeur basse.

5. Système de commande (500) selon une quelconque revendication précédente, dans lequel ledit deuxième sous-système de commande comprend un deuxième régulateur de vitesse (526) de type PID, seuls le terme P et le terme I étant de préférence utilisés, dans lequel ledit deuxième régulateur de vitesse (526) est conçu pour déterminer un signal de commande (55-2B) sur la base dudit deuxième signal de mesure (56) et d'une limite de vitesse supérieure (58), et le fournir en sortie.

6. Système de commande (500) selon une quelconque revendication précédente, comprenant un deuxième sélecteur (540B) conçu pour sélectionner le signal de commande (55-2B) au niveau de la sortie dudit deuxième régulateur de vitesse (526) lorsque ledit deuxième signal de mesure (56) a une valeur élevée.

7. Système de commande (500) selon une quelconque revendication précédente, dans lequel ledit premier sous-système de commande est conçu pour calculer un signal d'erreur de performance (53) comme une différence entre une consigne de performance (51) et ledit premier signal de mesure (52).

8. Système de commande (500) selon une quelconque revendication précédente, dans lequel ledit premier sous-système de commande comprend un contrôleur de charge (514) conçu pour déterminer une demande de charge (54) sur la base dudit signal d'erreur de performance (53).

9. Système de commande (500) selon une quelconque revendication précédente, dans lequel ledit premier sous-système de commande comprend un convertisseur (516) conçu pour déterminer un signal de commande (55-1) sur la base de ladite demande de charge (54).

10. Système de commande (500) selon une quelconque revendication précédente, dans lequel ledit convertisseur (516) est un convertisseur divisé et est conçu pour fournir alternativement un signal de commande (55-1) et un signal de commande anti-pompage (93).

11. Système de commande (500) selon une quelconque revendication précédente, dans lequel ladite entrée de performance (211) dudit premier et/ou deuxième sous-système (210) est conçue pour recevoir un signal de mesure (21) indiquant une pression d'aspiration dudit compresseur rotatif.

12. Installation de synthèse (1000) comprenant :
- un compresseur rotatif (350) comprenant une entrée (352) et une sortie (353), dans laquelle ladite entrée (352) est conçue pour recevoir un mélange gazeux (38) ;
- un moteur rotatif (360) entraînant ledit compresseur rotatif (350) ; et
- un système de commande (300) selon l'une quelconque des revendications précédentes.

13. Installation (1000) selon la revendication 12, dans laquelle ledit moteur rotatif (360) est une turbine à vapeur.

14. Installation (1000) selon la revendication 12 ou 13, comprenant un reformeur (370) en amont dudit compresseur rotatif (350), dans laquelle ledit reformeur (370) comprend une sortie (371) en communication fluidique avec ladite entrée (352) dudit compresseur rotatif (350).

15. Procédé (600) de commande d'un compresseur rotatif entraîné par un moteur rotatif, comprenant les étapes consistant à :
A) mesurer (602) un paramètre dudit compresseur rotatif, ledit paramètre indiquant une performance dudit compresseur rotatif,
B) générer (603) un premier signal de commande en fonction dudit paramètre,
C) mesurer (604) une vitesse de rotation dudit compresseur rotatif ou dudit moteur rotatif,
D) générer (605) un deuxième signal de commande en fonction de ladite vitesse de rotation,
**caractérisé en ce que** ledit procédé (600) comprend en outre les étapes consistant à :
E) générer (606) un troisième signal de commande en sélectionnant entre ledit premier signal de commande et ledit deuxième signal de commande, et
F) fournir (607) ledit troisième signal de commande à des bornes d'entrée dudit moteur rotatif.
